# EUROPEAN PATENT APPLICATION

(11) **EP 0 978 545 A1**
(43) Date of publication of application: **09.02.2000**
(21) Application number: 98305562.5
(22) Date of filing: 13.07.1998
(51) Int. Cl.: C09D 7/00, C08G 18/08

(54) **Solvents for polyurethane coatings**

(71) Applicant: Finch, Stephen, Bunny, Nottingham, NG11 6QQ (GB)
(72) Inventor: Finch, Stephen, Bunny, Nottingham, NG11 6QQ (GB)
(74) Representative: SERJEANTS

(57) **Abstract**

In two-component polyurethane coating systems, a hydroxyl functional polymer is combined with a polyisocyanate resin curative to form a polyurethane coating. In order to avoid the use of environmentally damaging volatile organic solvents, a water-borne polymer has been developed but it is poorly compatible with the existing solvents of the polyisocyanate resin. Accordingly, the invention provides a solution of a polyisocyanate curative for mixing with a water-borne hydroxyl functional polymer to form a polyurethane coating. The solution includes a first solvent of a lower molecular weight and a second solvent of a higher molecular weight, each of the solvents being an alkanediol or alkanetriol in which each hydroxy group is esterified or etherified.

## Description

### Technical Field

The invention relates to the field of two-component polyurethane coating systems. In such systems, a hydroxyl functional polymer is combined with a polyisocyanate resin to form a polyurethane coating. When the two components are mixed together, carried in suitable solvents, isocyanate groups (NCO) of the resin react with hydroxy groups (OH) of the polymer to produce a polyurethane in which the nitrogen of the isocyanate group is bonded directly to a hydrocarbon residue. The resulting coating gives high performance, including exceptional resistance to weathering, so is suitable for industrial applications. The present invention relates to the choice of solvents for the curative component, i.e. the polyisocyanate resin.

### Background of the invention

Polyurethane coatings have been widely used in industrial applications for many years. Recently, there has been increasing legal pressure to reduce the quantities of solvent that may harm the environment. With this aim, water-borne versions of the two-component systems have been developed, in which some or all of the volatile organic compounds used as solvents are replaced by water. The kinetic and thermodynamic properties of water differ greatly from those of the volatile organic solvents previously used, resulting in profound changes to the application and drying characteristics of the polyurethane coatings.

For example, one curative that may be used in a two-component polyurethane coating system is isophorone diisocyanate trimer (IPDI). At ambient temperatures, this material is a solid and for incorporation in a coating it needs to be dissolved in a solvent. In prior art systems, IPDI has generally been sold as a 70% solution in one or perhaps a combination of two solvents. These solvents have been chosen to suit systems in which the polymer is also solvent-borne.

When commercially available solutions of IPDI are brought together with a solvent-borne polymer, the IPDI may be expected also to dissolve slowly into the polymer solvent. When the commercially available solutions of IPDI are brought together with a water-borne polymer, the IPDI does not dissolve into the water. Because of the high rate of evaporation of the IPDI solvents, the IPDI can revert to a solid before all the water has evaporated from the coating surface. The solid IPDI forms a film, which interferes with further evaporation and causes severe coating faults.

Thus an alternative solvent for IPDI is needed, which will allow it to remain in solution until all the water has left the coating. The choice of solvents is difficult because a complex combination of properties should be optimized, including: polarity, miscibility with water, evaporative rate, hydroxyl reactivity, diffusion rate, static and dynamic surface tension, hydrolytic stability, partitioning and solubility parameters, toxicity, odour and price.

### The Invention

The inventor has identified a suitable combination of solvents that provides a useful balance between the properties listed above. Accordingly, the invention provides a solution of a polyisocyanate curative for mixing with a hydroxyl functional polymer to form a polyurethane coating, characterized in that the solution includes: a first solvent being an alkanediol or alkanetriol in which at least one of the hydroxy groups is esterified and any hydroxy group that is not esterified is etherified, the first solvent- having a molecular weight in the range 130 to 150; and a second solvent being an alkanediol or alkanetriol in which each hydroxy group is esterified or etherified, the second solvent having a molecular weight in the range 160 to 175.

The proportion by weight of the first solvent to the second solvent may be in the range 90:10 to 10:90, or more preferably in the range 60:40 to 40:60.

It has been found that by using suitable proportions of a first solvent of lower molecular weight and a second solvent of higher molecular weight, it is possible to achieve a desirable balance of properties that cannot be obtained with a single solvent. When a very high proportion of the first solvent is used, the following problems can arise in coating formation: foaming, a reduced range of application temperatures and a low pinhole threshold. When a very high proportion of the second solvent is used, the following problems can arise in coating formation: sagging, extended drying times and high cost. Thus a substantially equal proportion of the two solvents by weight is preferred.

The first solvent may be chosen from the group:
1-methoxy-2-propyl acetate
1-ethoxy-2-propyl acetate.

The preferred first solvent is 1-methoxy-2-propyl acetate.

The second solvent may be chosen from the group:
1-butoxy-2-propyl acetate
2-butoxyethyl acetate
1,2-diacetoxy-propane
dipropylene glycol dimethyl ether (CAS 111109-77-4).

The preferred second solvent is 2-butoxyethyl acetate.

The polyisocyanate solution may further include a third solvent being an alkanediol or alkanetriol in which each hydroxy group is esterified or etherified, he third solvent having a molecular weight in the range 120 to 190.

The preferred third solvent is 1-ethoxy-2-propyl acetate. Preferably the third solvent exceeds 10% by weight of the total solvent content of the solution.

The polyisocyanate curative preferably comprises an isophorone diisocyanate trimer (IPDI). This curative is preferred because, unlike many polyisocyanates, IPDI is solid at room temperature. This gives enhanced physical drying of the coating.

The invention also provides a method of forming a polyurethane coating comprising the step of mixing a hydroxyl functional polymer with a solution of a polyisocyanate curative as previously defined.

### Example

A polyisocyanate solution was prepared according to the following formulation:

| Component | | Wt % | Mol. weight |
|---|---|---|---|
| Polyisocyanate | IPDI | 60 | - |
| 1st solvent | 1-methoxy-2-propyl acetate | 20 | 132 |
| 2nd solvent | 2-butoxyethyl acetate | 20 | 160 |
| Catalyst | dibutyltin dilaurate | 0.02 | - |

The polyisocyanate solution was mixed with a water-borne solution of a hydroxyl functional polyester polymer to form a polyurethane coating. The coating was found to have the following desirable properties: tolerance of high application temperatures, high film thickness before the onset of pinholing, superior wet edge performance, low foaming, good sag resistance, reasonable drying time and good appearance.

## Claims

1. A solution of a polyisocyanate curative for mixing with a hydroxyl functional polymer to form a polyurethane coating,
CHARACTERIZED IN THAT the solution includes:
a first solvent being an alkanediol or alkanetriol in which at least one of the hydroxy groups is esterified and any hydroxy group that is not esterified is etherified, the first solvent having a molecular weight in the range 130 to 150; and
a second solvent being an alkanediol or alkanetriol in which each hydroxy group is esterified or etherified, the second solvent having a molecular weight in the range 160 to 175.

2. A polyisocyanate solution according to claim 1, wherein the proportion by weight of the first solvent to the second solvent is in the range 90:10 to 10:90.

3. A polyisocyanate solution according to claim 2, wherein the proportion by weight of the first solvent to the second solvent is in the range 60:40 to 40:60.

4. A polyisocyanate solution according to any preceding claim, wherein the first solvent is 1-methoxy-2-propyl acetate and the second solvent is 2-butoxyethyl acetate.

5. A polyisocyanate solution according to any preceding claim, further including a third solvent being an alkanediol or alkanetriol in which each hydroxy group is esterified or etherified, the third solvent having a molecular weight in the range 120 to 190.

6. A polyisocyanate solution according to claim 5, wherein the third solvent exceeds 10% by weight of the total solvent content of the solution.

7. A polyisocyanate solution according to claim 5 or claim 6, wherein the third solvent is 1-ethoxy-2-propyl acetate.

8. A polyisocyanate solution according to any preceding claim, wherein the polyisocyanate curative comprises an isophorone diisocyanate (IPDI) trimer.

9. A polyisocyanate solution according to claim 6, wherein the weight ratio of the IPDI trimer to the total solvent content of the solution is in the range 4:1 to 2.5:1.

10. A method of forming a polyurethane coating comprising the step of mixing a hydroxyl functional polymer with a solution of a polyisocyanate curative according to any preceding claim.
